# EUROPEAN PATENT APPLICATION

(11) **EP 1 433 566 A1**
(43) Date of publication of application: **30.06.2004**
(21) Application number: 03078385.6
(22) Date of filing: 29.10.2003
(51) Int. Cl.: B23Q 1/70, B23Q 1/54, B23Q 5/04

(54) **Machine tool operating head**

(30) Priority: 23.12.2002 IT MI20022744
(71) Applicant: Mandelli Sistemi SPA, 29100 Piacenza (IT)
(72) Inventor: Ferrari, Giuseppe, 29010 Sarmato (Piacenza) (IT); Bosoni, Roberto, 29100 Piacenza (IT)
(74) Representative: Ferroni, Filippo

(57) **Abstract**

The invention relates to an operating head (1) for machine tools, in which the part wherein the spindle (12) is disposed may tilt, revolve or move in some other way, in order to vary the orientation of the spindle depending on the tooling to be carried out.

The motor (13) for driving the spindle is disposed adjacent thereto and is connected by a mechanical transmission: as the spindle and the motor are on the same moving portion of the operating head, the latter combines the advantages of operating heads with electro-spindles and of heads with spindles separate from the motor, overcoming at the same time their drawbacks.

## Description

The invention relates to machine tool operating heads wherein the part on which the tool driving spindle is mounted, is movable with respect to the part supported by the machine structure.

As is known, the above-mentioned machines tipically carry out tooling operations with removal of shavings (milling, drilling, grinding, etc.) of workpieces disposed on appropriate tables, acting along a plurality of working axes.

For this reason, their operating head, i.e. the part where the tool driving spindle is located, is supported by the machine structure in a manner movable along a vertical and a horizontal direction.

Many constructional solutions are possible for this purpose; for instance, there are machine tools wherein the operating head is supported by a carriage or by a column which may move back and forth with respect to the workpiece to be processed, others wherein the head moves in translation along guides provided on a fixed frame of the machine while the table bearing the workpiece is movable, or intermediate solutions between these alternatives.

The operating heads to which the present invention relates, are those wherein the spindle is provided with an additional movement with respect to those described above, involving translation of the head as a whole so that its orientation can be varied: this is the case of heads with a tilting spindle or those with a revolving spindle.

In the former the spindle is supported by the head so that it can tilt with respect to a horizontal axis, whereas in the latter (also called "U-shaped") the part of the head where the spindle is housed revolves about an axis inclined by 45°, thereby orienting the spindle in a horizontal or vertical working position.

A typical example of a head with tilting spindle is disclosed in European Patent Application 1 092 499 in the name of F.M. Elettromeccanica, while a machine tool with revolving "U" head, invented in the 1970s by the same applicants for the present application, is disclosed in US Patent Specification 4 121 332.

A critical aspect of the machine tool operating heads described above is the actuation of their spindle: indeed the tilting or revolution of the latter generates inevitable complications as regards both the manufacturing of the operating heads and the means for rotating the spindle.

The solutions currently available for this purpose are of two main types.

In the first one the operating head is provided with a fixed motor which drives the spindle rotation by means of a gear train, suitable to transmit movement even when the operating conditions vary as a result of the tilting or revolutions of the spindle mentioned above; a machine tool with a driving system made according to this principle, is disclosed in the aforesaid US Patent in the name of the present applicants.

The second type of known driving system is based on the use of so-called electro-spindle, i.e. spindles incorporated in the rotor of the electric motor which rotates them; an operating head according to this solution forms the subject matter of the above-mentioned European Patent Application (F.M. Elettromeccanica), whereas an example of an electro-spindle is disclosed in US Patent 5 782 586.

The two driving systems described above have respective advantages and drawbacks which make their use more or less favourable, depending on the circumstances.

For instance, the solution with a fixed motor and mechanical transmission is reliable and robust but has a greater inertia and is bulkier than the solution with the electro-spindle, when the same powers are involved; it also generates a great deal of heat and noise as a result of the many engaging gears needed to transmit the rotary movement from the motor to the spindle.

Moreover, in the case of operating heads with tilting spindle there is a non-symmetrical temperature distribution as the shoulders on which the spindle is hinged, are used to house respectively the mechanism which controls its rotation and the mechanism which regulates its oscillation: as these mechanisms are different and operate with rather different speeds, the respective heat they generate because of internal friction are also different.

In the case of "U"-shaped heads where the part with the spindle can be revolved with respect to a 45° axis, conical toothed wheels are needed to drive its rotation with the limits inherent to this type of gear.

It can therefore be appreciated that operating heads having a fixed part on which the motor is disposed and a moving part (tilting, revolving or other) where the spindle is located and connected to the motor by a mechanical transmission, are not suitable for small-dimension machines in which it is therefore preferable to use an electro-spindle.

However, also this type of actuation may cause problems due to the fact that it does not have mechanical gear changes, since the spindle is incorporated directly in the rotor of the electric motor which drives it.

The result is that the operating features (speed, torque, etc.) of the spindle are in practice the same as those of the motor which, as it has no mechanical change, cannot provide very high torques at low speeds.

It is also known that electro-spindles are rather delicate because if the tool impacts against a workpiece, often it occurs that the stator and/or the rotor of the electric motor are damaged, with resulting problems in terms of time and repair costs.

The technical problem underlying the invention is therefore that of providing a machine tool an operating head in which the spindle is provided with a tilting, revolving or other type of movement, with structural and operating features as to remedy the drawbacks discussed above in relation to the prior art.

The idea for solving this problem resides in the provision of an operating head wherein the spindle is driven by an electric motor separate but rigid therewith, so that they can be moved together: it can be appreciated that in this manner the combined advantages of the electro-spindles and of the mechanical transmissions are afforded, yet avoiding the drawbacks of both.

Indeed, since the spindle and its relative driving motor are mounted on the same part of the operating head, i.e. the part that tilts or revolves in accordance with the prior art cited above, it is possible to connect the motor to the spindle with a simple and compact mechanical transmission which may also comprise a gear change with different gear ratios (range unit), as will be described below.

For this purpose, according to a preferred embodiment of the invention, the spindle and the driving motor are disposed adjacent to one another with parallel axes so that use can be made of gear reduction mechanisms with simple (i.e. not conical) toothed wheels, or even belts and the like.

It will be further appreciated that a simple and compact mechanical transmission simplifies also related aspects, such as lubrication or cooling to remove the heat generated by the gears during operation; in other words, a solution of this type provides synergic effects which make the operating head of the invention particularly advantageous.

Moreover, a transmission like that outlined above avoids to use an electro-spindle and its relatived problems as discussed before.

Further characterising features and advantages of the invention are set out in the following description of two non-limiting embodiments thereof, shown in the accompanying drawings wherein:

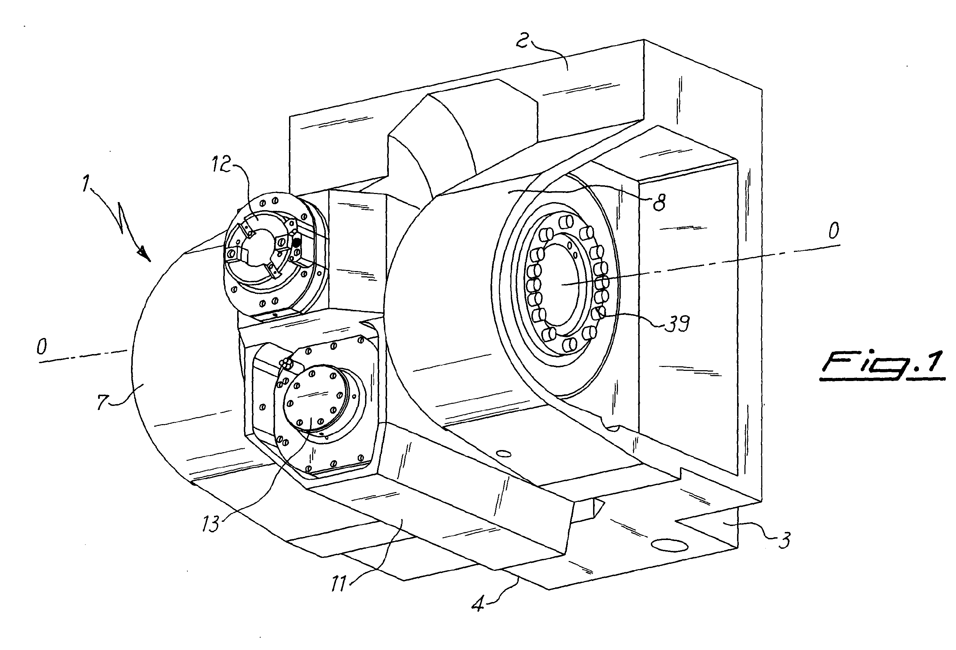

Fig.1 is a perspective view of an operating head with a tilting spindle according to the invention;
Fig. 2 is a detailed view of a part of the operating head of Fig. 1;
Fig. 3 is a differently-angled view of the part of Fig. 2;
Fig. 4 is a longitudinal section through the operating head of Fig. 1;
Fig. 5 shows an "U"-shaped operating head according to the invention;
Figs. 6 and 7 are longitudinal sections through the head of Fig.4, in respective operating conditions.

With reference to the first of these figures, numeral 1 indicates as a whole an operating head of the invention, designed to be installed on a machine tool structure not shown in the drawings but known per se, for instance from those produced by the applicants for this application.

To this purpose the head 1 has an external support frame 2, whose rear side is provided with recesses 3, 4 for the fastening of skids (not shown) engaging in a known manner, with guides provided on the machine tool structure.

Two shoulders 7 and 8 project from the front side of the frame 2, between which the moving part 10 of the head is provided, i.e. the part tilting about an axis O transverse thereto.

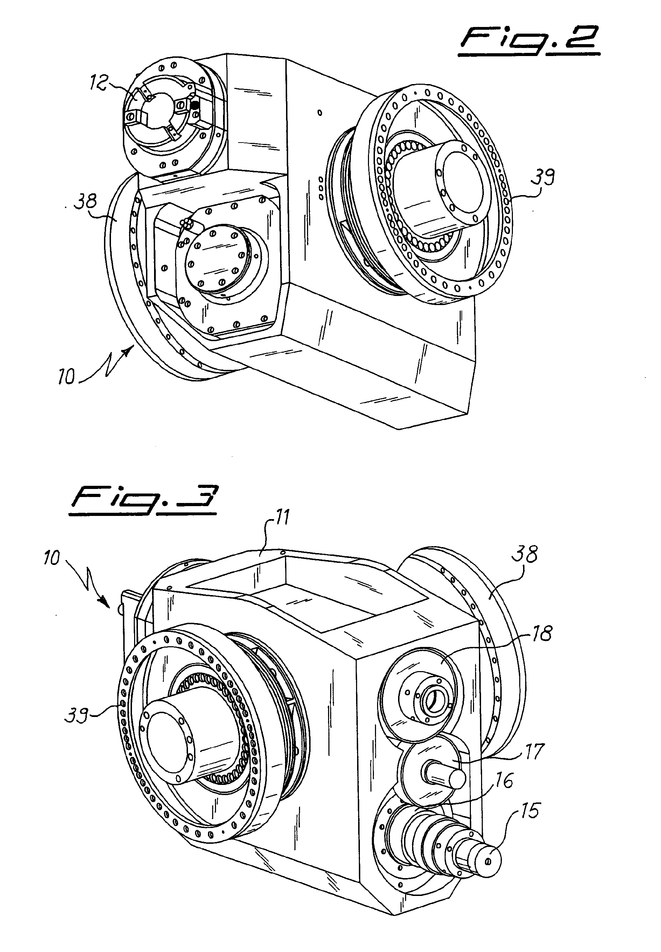

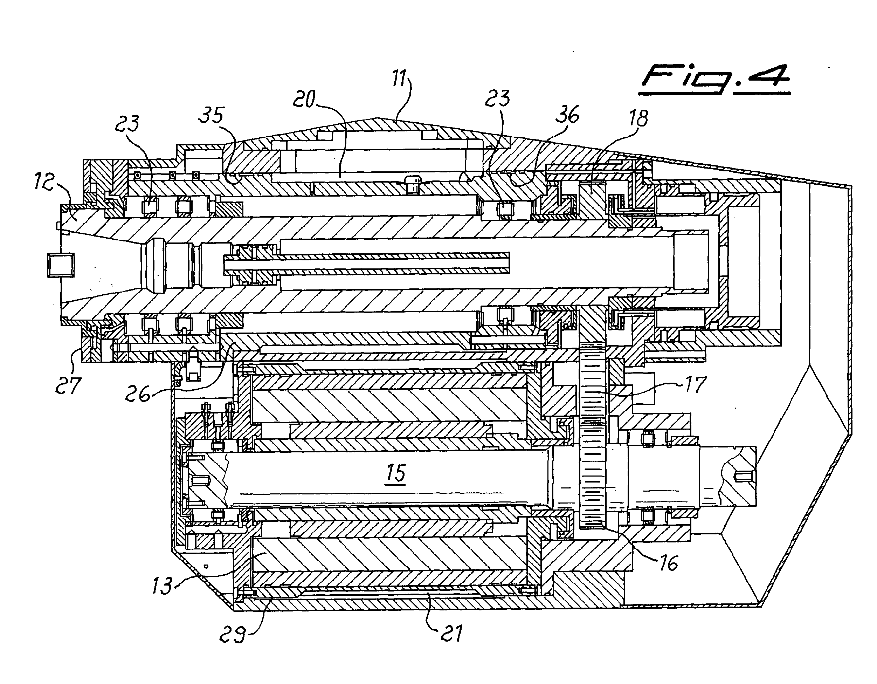

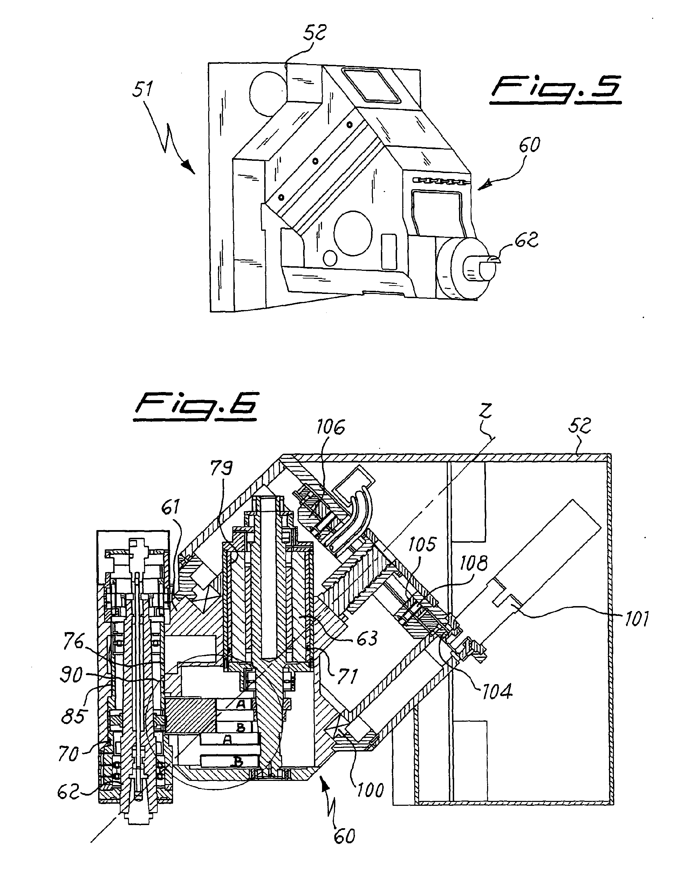

As can be seen from Figs. 2 and 3, this moving part comprises an external body 11 which houses the tool driving spindle 12 and its relatived driving motor 12, arranged in an adjacent manner with parallel axes.

The motor 13 is of electric type known for such applications and its output shaft 15 drives the spindle 12 through a series of gears 16-18.

In accordance with a preferred embodiment, the body 13 is divided internally into two cavities 20 and 21, in which the spindle 12 and the motor 13 are respectively housed; for this purpose the spindle with respective support bearings 23 and the remainder of its components are accomodated in a casing 26, closed at the front by a cover 27 secured with screws and inserted in the cavity 20 of the body 11.

Similarly, the motor 13 is also housed in a casing 29 inserted in the corresponding cavity 21.

In this way the spindle and the motor can be rapidly removed from the body 11 for maintenance and can be replaced with a new spindle or motor, that can be inserted in the respective cavity as a replacement cartridge; for this purpose it is necessary only to disconnect the electricity and cooling fluid supply, and to remove the toothed wheels 16-18.

A further advantage resulting from the positioning of the spindle in the casing, lies in the fact that it is possible to provide a circuit for cooling its parts where heat is generated, i.e. the zones of the bearings and of the driving.

Spiral ducts 35 and 36 are formed in these zones on the exterior of the casing 26 which, when the latter is inserted in the cavity 20, are closed by the inner wall thereof thereby defining a circuit for the cooling fluid.

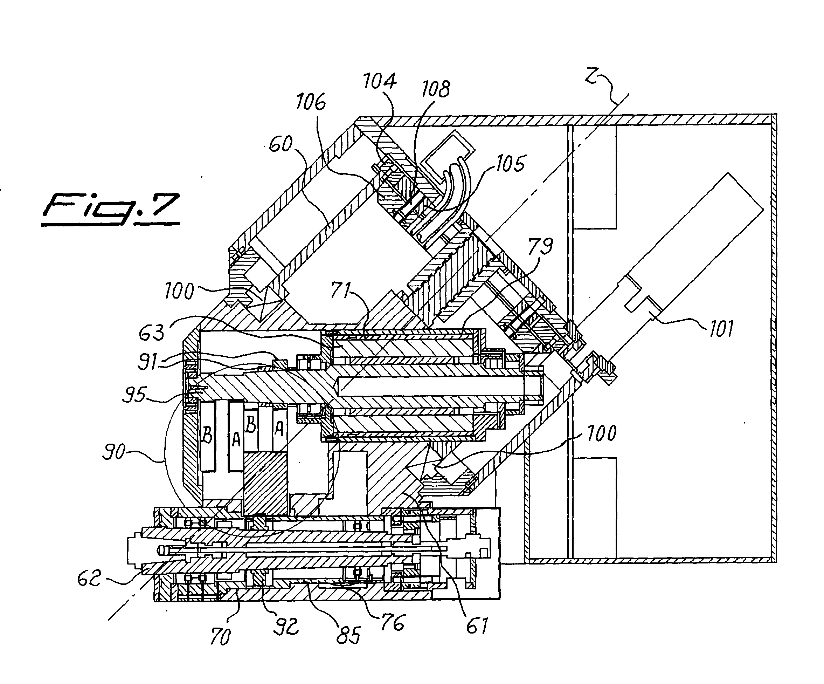

A similar system can be provided for the electric motor 13, although the heat that it generates is greater and it is therefore more convenient to cause the cooling fluid to flow within the casing 29, as shown in the embodiment of Fig. 4.

The body 11, with the spindle 12 and the motor 13, inside is supported by the shoulders 7 and 8 of the frame of the operating head, so that it can be oriented with respect to the axis tilting O in accordance with the tooling requirements.

For this purpose the flanks of the body 11 are provided with two bearings 38, 39 which enable its rotation controlled by a known mechanism (not shown in the drawings), housed in the shoulders 7 and 8 in order to vary the angle of inclination of the spindle 12 during processing.

From the above explanation it can be understood how the operating head 1 solves the problem underlying the invention.

The spindle 12 and its driving motor 13 are in practice both mounted on the moving part 10 of the head, i.e. the tilting part, so that the mechanical transmission connecting them is, as already explained, simple and compact since in this case it is formed by a simple tern of toothed wheels 16-18.

In other words, the fact that the motor is laid close to the spindle and they are solid with one another, substantially simplifies the configuration of the operating head as a whole.

In this respect it should be borne in mind that generally in the prior art, the motor is on the fixed part of the operating head and the complexity of the mechanical transmission depends further to the distance of the motor from the spindle, also on the fact that the latter moves (i.e. oscillates) with respect to the former.

By arranging the spindle and the motor together on the tilting part 10 of the operating head 1, the latter becomes similar from this point of view to the operating heads with electro-spindle (for instance the one disclosed in European Patent Application 1 092 499).

Unlike these heads, however, in the present invention the spindle and the motor are separate, i.e. they are not integrated into a single electro-spindle with all the aforesaid limits and adverse consequences arising therefrom.

Of course variants of the invention with respect to the operating head described above are possible.

For instance, the mechanical transmission between the output shaft 15 of the motor and the spindle could include a change gear as will be described below, in place of the three wheels 16-18; likewise, these wheels could be replaced by toothed belts, chains or the like.

The selection of these different alternatives will be essentially of design nature and will depend on the powers involved, dimensions and other aspects.

The principles underlying the invention are nevertheless applicable to operating heads different from the tilting head of the previous embodiment, for instance to the "U"-shaped head shown in Figs. 5, 6 and 7.

This head, indicated overall by 51, also comprises a support frame 52 adapted to be mounted on guides provided in the structure of the machine tool.

The head 51 has a moving part 60 which may rotate with respect to an axis Z inclined by 45°, so as to bring the spindle 62 from a vertical operating position (Fig. 6) to a horizontal position (Fig. 7) and vice versa.

The moving part 60 comprises an external body 61 wherein two cavities 70 and 71 are provided, the first of which houses the spindle 62 while the second houses the motor 63; as in the previous embodiment, the spindle 62 and the motor 63 are disposed with parallel axes and have respective casings 76 and 79 which allow their rapid insertion and removal from the cavities.

Moreover, also in this case a spiral duct 85 is formed on the casing 76 of the spindle 62, which is coupled with the inner wall of the cavity 70 to form a cooling fluid circulation path.

In accordance with this embodiment of the invention, the spindle 62 is driven by the motor 63 by means of a cylindrical gear change 90 which allows to obtain different speed ratios; for this purpose a series of toothed wheels shown by letters A, B in Figs. 6 and 7 is axially displaced by hydraulic jacks or equivalent means (not shown in the drawings because known per se), so as to bring the toothed wheels 91 and 92 keyed on the shaft 95 of the motor and on the spindle 62 respectively, into engagement with one another.

It will be appreciated that the spindle is driven by the toothed wheel 92 which, in contrast to the preceding embodiment, is not keyed on the shank but on the front zone of the spindle.

This solution allows a better use of the spaces inside the operating head 51, taking into account of the revolving rotation of its moving part 60 with respect to the inclined axis Z.

For carrying out this rotation, the moving part 60 is supported in the fixed frame 52 by means of a bearing 100 and its gradual rotation is controlled by a motor 101 through of a transmission and locking system with toothed crowns 104, 105 and 106 of the Hirt type.

The crowns 104 and 105 are concentric and have single sets of teeth, while the crown 106 is below the others and has double sets of teeth suitable to engage with the previous teeth; the innermost upper crown, i.e. the crown 105, is secured to the frame 52 of the operating head, while the lower crown 106 may be displaced axially by actuators 108.

Following to these displacements, the lower crown 106 enables the revolving rotation of the moving part 60 of the head in order to bring the spindle 62 from the vertical working position to the horizontal working position and vice versa, or to lock it in intermediate positions allowed by the division of the teeth.

This system could be replaced by a hydraulic brake, not shown in the drawings yet known per se, in order to be able to lock the rotation of the moving part 60 in any position deemed necessary.

It will be readily appreciated from the foregoing that the operating head 51, although of the "U"-shaped type, makes it possible to achieve the same advantageous effects as the previous head with the tilting spindle.

Indeed, also in this case the mounting of the spindle 62 and of the driving motor 63 on the moving part 60 of the head, allows to achieve a simple and compact mechanical transmission with all the advantages discussed above in relation to the previous embodiment, to which reference should be made for the sake of brevity.

It should be further noted that the parallel arrangement of the spindle and of the motor on the same part of the head, makes it possible to have a cylindrical gear transmission between them, i.e. not using conical gears as in the case of the "U"-shaped heads of the prior art (for further details, reference should be made to the above-mentioned US Patent Specification in the name of the present applicants).

As is known, conical gears are unable to provide high torques at a high number of revolutions; moreover, cylindrical gears are suitable for gear changes as described in this embodiment which would not, however, be possible with conical gears.

Of course, in this case too, variants of the operating head with respect to what has been described hitherto are possible, which nevertheless fall within the scope of the following claims.

## Claims

1. A machine tool operating head comprising a support frame (2; 52), a movable part (10; 60) moving with respect to the frame in which a tool driving spindle (12; 62) is located, a motor (13; 63) for driving the spindle to which it is connected by transmission means (16, 17, 18; 90, 91, 92), **characterised in that** said motor is located in the moving part (10; 60) of the head.

2. An operating head according to claim 1, wherein the spindle (12; 62) and the motor (13; 63) are arranged with their respective axes of rotation parallel to each other.

3. An operating head according to claims 1 and 2, wherein the moving part (10; 60) comprises an external body (11; 61) with two cavities (20, 21; 70, 71) inside which the spindle (12; 62) and the motor (13; 63) are respectively housed.

4. An operating head according to claim 3, wherein the spindle (12; 62) is supported in a rotary manner inside a casing (26; 76) that can be removed from the corresponding cavity (20; 70).

5. An operating head according to claim 4, wherein at least a part of the casing (26; 76) where the spindle (12, 62) is supported, is cooled by a fluid circulating in a duct (35; 85) bounded between the casing and the inner wall of the cavity (20; 70) in which it is housed.

6. An operating head according to claim 5, wherein the electric motor is housed in a casing (29; 79) which can be removed from the corresponding cavity (21; 71).

7. An operating head according to the preceding claims, wherein the transmission means (16, 17, 18; 90, 91, 92) comprises a plurality of cylindrical toothed wheel gears.

8. An operating head according to the preceding claims, wherein the transmission means comprises a gear change (90, A, B) with cylindrical gears.

9. An operating head according to the preceding claims, wherein the moving part (10) is supported in a tilting manner with respect to an axis (O) transverse to the frame (2).

10. An operating head according to claims 1 to 8, wherein the moving part (60) is supported in a revolving manner about an axis (Z) inclined with respect to the frame.
